# FASCICULE DE BREVET EUROPEEN

(11) **EP 2 639 913 B1**
(45) Date de publication et mention de la délivrance du brevet: **08.07.2015**
(21) Numéro de dépôt: 13305282.9
(22) Date de dépôt: 13.03.2013
(51) Int. Cl.: H02G 3/32, F16L 55/033

(54) **Dispositif de fixation d'un harnais élétrique dans un aeronef**
Vorrichtung zum Befestigen einer elektrischen Triebwerksausrüstung in einem Luftfahrzeug
Device for attaching an electrical harness in an aircraft

(30) Priorité: 15.03.2012 FR 1252348
(43) Date de publication de la demande: 18.09.2013
(73) Titulaire: Airbus Opérations SAS, 31060 Toulouse (FR)
(72) Inventeur: Marche, Hervé, 31200 Toulouse (FR); Geliot, Jean, 31400 Toulouse (FR)
(74) Mandataire: Fantin, Laurent

(56) Documents cités:
- EP-A1- 0 490 157
- WO-A2-2008/001313
- CN-U- 202 084 874
- DE-A1-102010 022 194

## Description

La présente invention se rapporte à un dispositif de fixation d'un harnais électrique dans un aéronef.

De manière connue, un harnais électrique comprend plusieurs éléments conducteurs qui sont maintenus les uns contre les autres dans une gaine tressée. Chaque harnais doit être maintenu en position sur toute sa longueur pour ne pas interférer avec d'autres éléments.

Cette contrainte est primordiale au niveau de certaines zones d'un aéronef exiguës comme par exemple un pylône qui assure la liaison entre une motorisation et le reste de l'aéronef. Le pylône doit assurer non seulement la reprise mécanique des efforts mais doit également permettre le cheminement de nombreux conduits de fluides comme par exemple le kérosène et de nombreux câbles électriques regroupés sous forme de harnais comme par exemple un harnais regroupant des câbles de génération qui assurent l'alimentation en énergie électrique de l'aéronef ou des harnais de câbles de communication qui assurent la transmission de commande ou de signaux entre la motorisation et le reste de l'aéronef.

Pour assurer le maintien des différents harnais selon une position donnée, des dispositifs de fixation sont utilisés et répartis le long du cheminement des harnais.

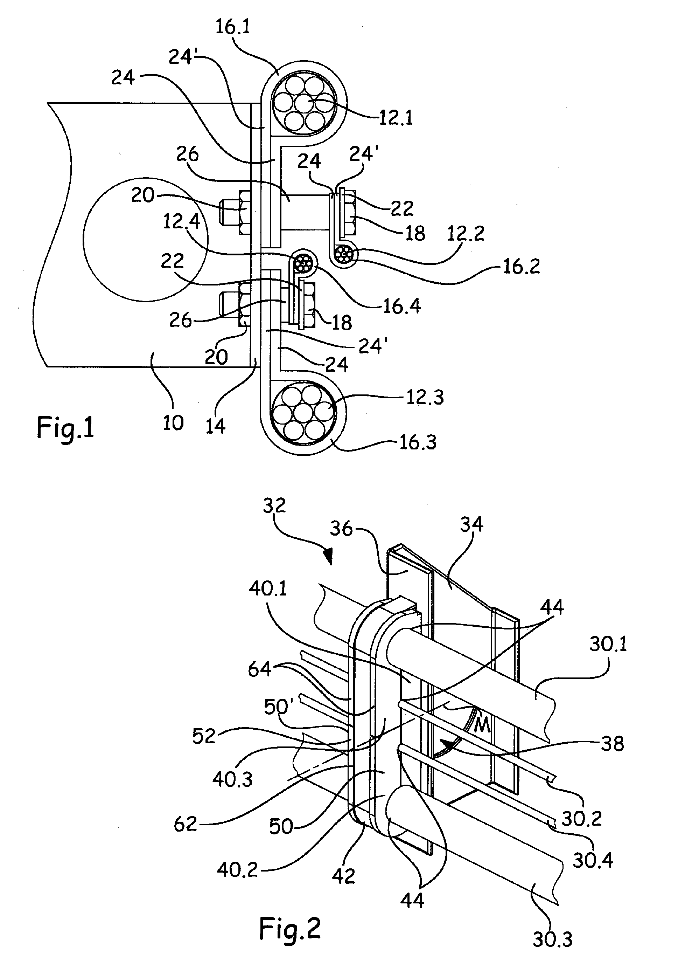

Sur la figure 1, on a représenté de manière schématique en 10 une partie d'un support relié à la structure d'un pylône à laquelle sont fixés des harnais 12.1 à 12.4. Pour les fixer, le support 10 comprend une aile 14 s'étendant dans un plan sensiblement parallèle à la direction de cheminement des harnais. Chaque harnais 12.1 à 12.4 comprend une attache 16.1 à 16.4 spécifique reliée au support 10 par un ensemble constitué d'une vis 18, d'un écrou 20 et d'une rondelle 22.

Chaque attache 16.1 à 16.4 se présente sous la forme d'une bande métallique en forme de boucle et dont les extrémités appelées pattes 24, 24' sont plaquées l'une contre l'autre et solidarisées au support par un ensemble vis/écrou/rondelle. Pour réduire le nombre de pièces, le même ensemble vis/écrou/rondelle est utilisé pour solidariser deux harnais. Dans ce cas, une entretoise 26 est intercalée entre les pattes 24, 24' des deux attaches 16.1 et 16.2 (ou 16.3 et 16.4).

Selon ce mode de réalisation, il est nécessaire de prévoir onze éléments pour chaque support 10. Dans le cas d'un pylône, il convient de prévoir douze supports, soit cent trente-deux éléments à assembler.

Un aussi grand nombre d'éléments tend nécessairement à impacter le temps d'assemblage, à augmenter la masse embarquée et à complexifier la gestion des pièces.

On connait d'après le document WO2008/001313 un dispositif selon le préambule de la revendication 1.

On connait également d'après les documents DE-10.2010.022194 et CN-202.084.874 un dispositif pour fixer un câble qui comprend deux mâchoires et une bride rigide en U permettant de maintenir les mâchoires fermées et fixées sur un support.

Enfin, on connait d'après le document EP-490.1757 un dispositif de maintien de câbles qui comprend une première partie avec deux mâchoires articulées et une deuxième partie qui comprend un support et une bride rigide articulée au support, ladite bride permettant de maintenir fermées les deux mâchoires.

Ces dispositifs ne permettent pas une mise en place rapide et aisée.

Aussi, la présente invention vise à remédier aux inconvénients de l'art antérieur.

A cet effet, l'invention propose un dispositif de fixation d'un harnais électrique sur une structure d'un aéronef comprenant un support relié à la structure, le harnais suivant une direction de cheminement, ledit dispositif comprenant un corps avec au moins deux mâchoires, au moins une des mâchoires étant mobile dans un plan de référence perpendiculaire à la direction de cheminement entre une première position ouverte dans laquelle elles permettent l'introduction d'au moins un harnais et une seconde position fermée dans laquelle elles maintiennent en position le ou les harnais introduits, et d'autre part, une bande de maintien dont les extrémités sont reliées au support permettant de maintenir les mâchoires en position fermée et le corps plaqué contre le support, ledit dispositif étant caractérisé en ce que la bande maintien est sous forme d'une lame.

Cet agencement permet à partir de deux éléments à savoir le corps et la bande de maintien de maintenir plusieurs harnais ce qui tend à réduire le nombre d'éléments nécessaire pour relier le ou les harnais à la structure.

De préférence, le corps comprend trois mâchoires, une première mâchoire qui coopère avec deux mâchoires reliées chacune par une zone d'articulation à la première mâchoire. Cette configuration permet de fixer plusieurs harnais avec le même corps.

Avantageusement, les zones d'articulation sont le plus éloignées possible de manière à ce que les ouvertures des mâchoires soient orientées l'une vers l'autre afin d'assurer un meilleur maintien des harnais.

De préférence, la bande de maintien est une lame ressort. Cette solution permet de pouvoir utiliser l'effet ressort de la lame pour la solidariser rapidement au support.

Selon un mode de réalisation, le support comprend au moins une fente et en ce qu'au moins une extrémité de la bande de maintien est recourbée sur elle-même de manière à former une première portion rectiligne, une portion courbe et une seconde portion rectiligne, la distance entre les deux portions rectilignes augmentant en s'éloignant de la portion courbe afin de permettre l'introduction de ladite extrémité dans la fente et d'empêcher son retrait sans une action de pincement tendant à rapprocher les deux portions rectilignes.

Selon un mode de réalisation, l'autre extrémité de la bande de maintien comprend une forme en L, le pied du L étant introduit dans une fente prévue dans le support de manière à retenir la bande de maintien.

Avantageusement, chaque mâchoire comprend pour chaque harnais une empreinte demi-cylindrique, les empreintes de deux mâchoires étant disposées en vis-à-vis par paire lorsque les mâchoires sont en position fermée afin de délimiter un passage de forme sensiblement cylindrique.

D'autres caractéristiques et avantages ressortiront de la description qui va suivre de l'invention, description donnée à titre d'exemple uniquement, en regard des dessins annexés sur lesquels :
- la figure 1 est une coupe illustrant les différents éléments nécessaires pour la fixation de plusieurs harnais sur un support selon l'art antérieur,
- la figure 2 est une vue en perspective d'un dispositif de fixation de plusieurs harnais selon l'invention,

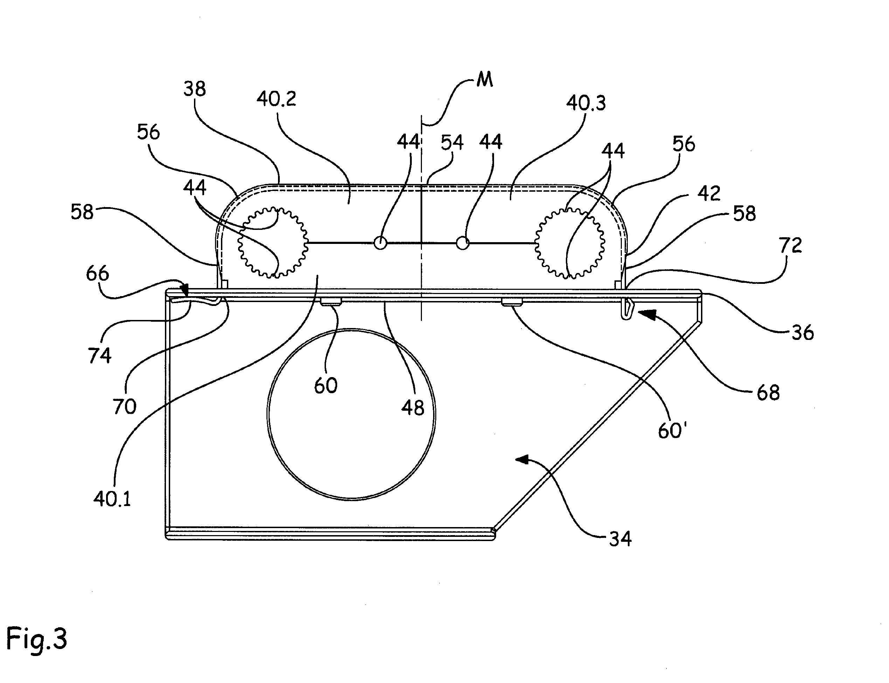

- la figure 3 est une vue de côté d'un dispositif de fixation selon l'invention,
- la figure 4 est vue de côté illustrant en détails une partie du dispositif de fixation selon la figure 3, et
- les figures 5A à 5C sont différentes vues illustrant la mise en place du dispositif de fixation selon l'invention.

Sur la figure 2, on a représenté quatre harnais électriques 30.1 à 30.4 susceptibles d'être fixés par un dispositif de fixation 32 à la structure d'un pylône d'un aéronef. Comme pour l'art antérieur, dans le cas d'un pylône, douze dispositifs de fixation 32 permettent de maintenir en position les harnais 30.1 à 30.4 selon un cheminement donné.

Comme pour l'art antérieur, un dispositif de fixation comprend un support 34 relié par tous moyens appropriés à la structure de l'aéronef et qui comporte une surface d'appui sous forme d'une aile 36 orientée parallèlement à la direction de cheminement des harnais. Les supports 34 et leurs fixations à la structure du pylône ne sont pas plus détaillés car ils sont connus de l'homme du métier.

Bien que décrite appliquée aux harnais électriques cheminant dans un pylône d'un aéronef, l'invention n'est pas limitée à cette application. Ainsi, le dispositif de fixation décrit peut être utilisé pour solidariser au moins un harnais électrique à la structure d'un aéronef quelle que soit la zone de l'aéronef.

Selon l'invention, le dispositif de fixation 32 comprend en plus du support 34, d'une part, un corps 38 avec au moins deux mâchoires 40.1 et 40.2, au moins une des mâchoires étant mobile dans un plan de référence perpendiculaire à la direction de cheminement entre une première position ouverte dans laquelle elles permettent l'introduction d'au moins un harnais et une seconde position fermée dans laquelle elles maintiennent en position le ou les harnais introduits, et d'autre part, une bande de maintien 42 permettant de maintenir les mâchoires en position fermée et le corps plaqué contre le support 34.

De préférence, au moins une des mâchoires 40.1 et 40.2 comprend une empreinte 44 dont la forme est conforme à au moins une partie de la section du harnais. Selon un mode de réalisation préféré, chaque mâchoire comprend pour chaque harnais une empreinte 44 demi-cylindrique, les empreintes 44 de deux mâchoires étant disposées en vis-à-vis par paire lorsque les mâchoires sont en position fermée. Pour chaque paire ainsi formée, les empreintes 44 délimitent un passage de forme sensiblement cylindrique orientée selon la direction de cheminement des harnais et dont le diamètre est sensiblement égal au diamètre extérieur du tronçon de harnais maintenu.

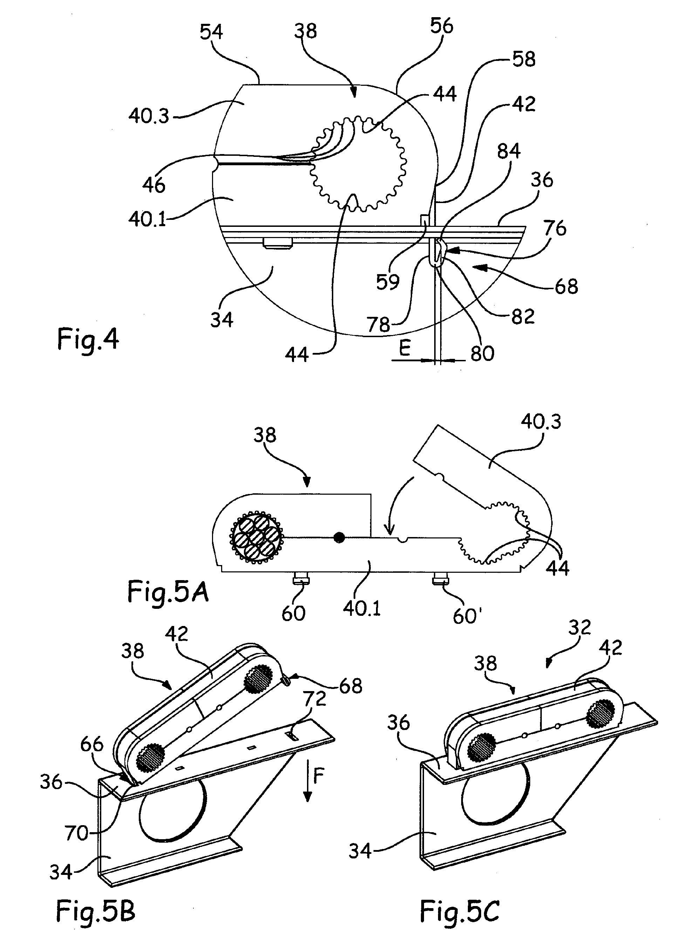

Avantageusement, au moins une empreinte 44 comprend des cannelures 46 comme illustré sur la figure 4, orientées selon la direction de cheminement des harnais. Ce profil permet à une même empreinte de pouvoir s'adapter à une plage de diamètres pour les harnais variant par exemple de 14 à 17 mm.

Selon un mode de réalisation, le corps 38 comprend une surface de contact 48 en appui contre le support 34 et plus particulièrement contre l'aile 36 lorsque le dispositif est fixé, et deux surfaces terminales planes 50, 50', parallèles entre elles, perpendiculaires à la surface 48 et à la direction de cheminement des harnais.

En complément, le corps 38 comprend un chant 52 dont la largeur est égale à celle de la surface de contact 48, qui s'étend entre les deux surfaces terminales 50 et 50', le chant 52 et les surfaces 48, 50, 50' définissant un volume correspondant à celui du corps. Le chant 52 est perpendiculaire au plan de référence.

La bande de maintien est plaquée contre au moins une partie du chant 52.

Selon un mode de réalisation, le chant 52 est symétrique par rapport à un plan médian M perpendiculaire à la surface de contact 48 et parallèle à la direction de cheminement des harnais. Il comprend une portion centrale 54 plane et parallèle à la surface de contact 48, prolongée de part et d'autre par des portions courbes 56 elles-mêmes prolongées par des portions latérales planes 58 qui s'étendent jusqu'à la surface de contact 48. De préférence, l'écartement entre les deux surfaces latérales 58 augmente en s'éloignant de la surface de contact 48. Cet agencement facilite la mise en place de la bande de maintien 42. De préférence, la jonction entre la surface de contact 48 et les surfaces latérales 58 comprend un décrochement 59 (visible sur la figure 4). Avantageusement, le corps comprend des moyens pour l'immobiliser en translation selon la direction de cheminement des harnais. A cet effet, la surface de contact 48 comprend au moins un pion 60 qui se loge dans une empreinte de forme identique prévue dans le support 34. Selon un mode de réalisation, le pion est cylindrique et le logement correspondant est également cylindrique et a un diamètre égal à celui du pion. Cet agencement permet d'immobiliser le corps selon deux translations parallèles à la surface 48.

De préférence, le corps comprend des moyens pour l'empêcher de pivoter autour d'un axe perpendiculaire à la surface de contact 48. Selon un mode de réalisation, la surface de contact 48 comprend deux pions 60 et 60' qui se logent chacun dans une empreinte de forme identique prévue dans le support 34.

Le fait que le corps 38 soit en contact plan avec le support 34 et qu'il soit maintenu ainsi par la bande de maintien 42 permet de l'immobiliser selon les deux autres rotations et selon la translation perpendiculaire à la surface de contact 48. Ainsi, le corps est parfaitement immobilisé.

Avantageusement, le corps comprend des moyens pour positionner la bande de maintien 42. A cet effet, le chant 52 comprend une gorge 62 qui s'étend sur au moins une partie du chant et dont la largeur est égale à celle de la bande de maintien 42. Ainsi, les rebords 64 disposés de part et d'autre de la gorge 62 assurent l'immobilisation de la bande maintien 42 dans la gorge 62.

Selon un mode de réalisation préféré, la gorge 62 s'étend sur toute la longueur du chant 52.

De préférence, le corps 38 comprend trois mâchoires, une mâchoire 40.1 qui coopère avec deux mâchoires 40.2 et 40.3. Selon un mode de réalisation la première mâchoire dite mâchoire inférieure 40.1 correspond à la moitié du corps 38 plaquée contre le support. Les deux autres mâchoires 40.2 et 40.3 sont articulées par rapport à la première mâchoire 40.1 et sont symétriques par rapport au plan médian M. Ainsi, la mâchoire supérieure gauche 40.2 correspond au quart supérieur gauche du corps 38 et la mâchoire supérieure droite 40.3 correspond au quart supérieur droit du corps 38.

Avantageusement, les mâchoires supérieures gauche 40.2 et droite 40.3 sont articulées par rapport à la mâchoire inférieure 40.1 au niveau des surfaces latérales 58, soit à l'opposé du plan médian M. Ainsi, selon l'invention, les zones d'articulation sont les plus éloignées possible de manière à ce que les ouvertures des mâchoires soient orientées l'une vers l'autre.

La présence du décrochement 59 améliore l'effet charnière lors de l'ouverture des mâchoires 40.2 et 40.3.

De préférence, chaque mâchoire supérieure gauche 40.2 ou droite 40.3 comprend au moins une empreinte 44. En complément, la mâchoire inférieure 40.1 comprend au moins deux empreintes 44 disposées en vis-à-vis des empreintes 44 prévues au niveau des mâchoires 40.2 et 40.3.

Comme illustré sur les différentes figures, chaque mâchoire supérieure gauche 40.2 ou droite 40.3 comprend deux empreintes et la mâchoire inférieure 40.1 quatre empreintes.

De préférence, les empreintes ayant le plus grand diamètre sont disposées à proximité des surfaces latérales 58.

Pour chaque mâchoire supérieure 40.2 ou 40.3, la zone entre la surface latérale 58 et l'empreinte la plus proche forme une articulation entre chaque mâchoire supérieure et la mâchoire inférieure permettant le passage de la position ouverte à la position fermée et vice versa. Avantageusement, la distance entre la surface latérale 58 et l'empreinte la plus proche est sensiblement égale à la distance qui sépare l'empreinte de la portion courbe 56 et à celle qui sépare l'empreinte de la surface de contact 48.

Selon un mode de réalisation, le corps 38 est en élastomère.

Selon une caractéristique de l'invention, la bande de maintien 42 se présente sous la forme d'une lame, métallique en forme de U dont les extrémités 66 et 68 sont reliées au support 34.

De préférence, la bande maintien 42 est une lame ressort. Ainsi, elle est réalisée dans un matériau lui conférant un certain effet ressort. Selon un mode de réalisation, la bande de maintien est en acier inoxydable.

Pour assurer la liaison entre la bande de maintien 42 et le support 34, l'aile 36 comprend deux fentes 70 et 72 sensiblement rectangulaires, dont la longueur est égale au jeu près à la largeur de la bande de maintien 42. La largeur des fentes 70 et 72 est déterminée de manière à permettre l'introduction des extrémités 66 et 68 de la bande de maintien 42 et leur maintien après l'introduction.

En complément, la bande de maintien 42 comprend au niveau de l'extrémité 66 une forme en L, le pied du L 74 étant introduit dans une des deux fentes 70 de manière à retenir la bande de maintien.

A l'opposé, l'extrémité 68 est recourbée sur elle-même de manière à former une boucle 76. Cette boucle 76, illustrée en détails sur la figure 4, comprend une première portion rectiligne 78, une portion courbe 80, une seconde portion rectiligne 82 et une dernière portion recourbée 84 en direction de la première portion rectiligne 80. Selon un point important, la distance entre les deux portions rectilignes 78 et 82 augmente en s'éloignant de la portion courbe 80 afin de permettre l'introduction de l'extrémité 68 dans la fente et empêcher son retrait sans une action de pincement tendant à rapprocher les deux portions 78 et 82.

Ainsi, à l'état repos, les deux portions rectilignes 78 et 82 sont espacées d'une certaine distance E. Lorsqu'elles sont pincées ou lors de l'introduction de l'extrémité 68 dans une fente, ces deux portions 78 et 82 sont espacées d'une distance inférieure à E et reviennent à l'état repos grâce à l'effet ressort de la bande de maintien 42.

La fente 72 a une largeur adaptée pour permettre l'introduction de l'extrémité 68 lorsque les deux portions rectilignes 78 et 82 sont rapprochées l'une de l'autre et pour empêcher le retrait de l'extrémité 68 lorsque les deux portions rectilignes 78 et 82 sont à l'état repos.

Selon une autre variante, les deux extrémités de la bande de maintien peuvent avoir le même profil que l'extrémité 68.

Le dispositif de fixation est relativement simple à utiliser.

Comme illustré sur la figure 5A, les harnais sont dans un premier temps mis en place entre les mâchoires du corps 38. En suivant, le corps 38 est placé sur le support 34 et la première extrémité 66 de la bande de maintien est introduite dans la fente 70 du support comme illustré sur la figure 5B.

En suivant, la seconde extrémité 68 du corps est introduite dans la fente 72 en exerçant un effort F en direction du support, comme illustré sur la figure 5C. Lors de cette introduction, les deux portions rectilignes 78 et 82 se rapprochent. Après le passage de la portion recourbée 84, les deux portions rectilignes 78 et 82 s'écartent grâce à l'effet ressort et empêchent le retrait de l'extrémité 68. Les harnais sont alors fixés au support.

Pour démonter le dispositif de fixation, il suffit de pincer les deux portions rectilignes 78 et 82 pour permettre la sortie de l'extrémité 68.

Le dispositif de fixation procure les avantages suivants :
Comme indiqué ci-dessus, sa mise en place est relativement simple et ne nécessite pas d'outillage.

Le nombre d'éléments mis en place au niveau d'un pylône est fortement réduit dans la mesure où il ne faut plus que deux éléments par support, soit au total 24 éléments pour un pylône contre cent trente-deux pour l'art antérieur. Ainsi, le temps pour la mise en place des harnais est fortement réduit. De plus, la gestion des éléments nécessaires pour la fixation des harnais est grandement simplifiée dans la mesure où il ne reste plus que trois références (support/corps/bande de maintien) à gérer.

Les modifications apportées au support sont mineures. Ainsi, par rapport à un support de l'art antérieur qui prévoit deux trous, un support adapté à l'invention comprend deux trous pour les pions et deux fentes.

Enfin, le dispositif permet d'obtenir un gain de masse de l'ordre de 0,5 kg pour chaque pylône.

## Revendications

1. Dispositif de fixation d'un harnais électrique sur une structure d'un aéronef comprenant un support (34) relié à la structure, le harnais suivant une direction de cheminement, ledit dispositif comprenant un corps (38) avec au moins deux mâchoires (40.1, 40.2), au moins une des mâchoires étant mobile dans un plan de référence perpendiculaire à la direction de cheminement entre une première position ouverte dans laquelle elles permettent l'introduction d'au moins un harnais et une seconde position fermée dans laquelle elles maintiennent en position le ou les harnais introduits, et d'autre part, une bande de maintien (42) dont les extrémités (66, 68) sont reliées au support (34) permettant de maintenir les mâchoires en position fermée et le corps plaqué contre le support (34), **caractérisé en ce que** la bande de maintien (42) est sous forme d'une lame.

2. Dispositif de fixation selon la revendication 1, **caractérisé en ce que** la bande de maintien (42) est plaquée contre au moins une partie d'un chant (52) du corps qui est perpendiculaire au plan de référence.

3. Dispositif de fixation selon la revendication 1 ou 2, **caractérisé en ce que** le corps (38) comprend trois mâchoires, une première mâchoire (40.1) qui coopère avec deux mâchoires (40.2, 40.3) reliées chacune par une zone d'articulation à la première mâchoire (40.1).

4. Dispositif de fixation selon la revendication 3, **caractérisé en ce que** les zones d'articulation sont le plus éloignées possible.

5. Dispositif de fixation selon l'une quelconque des revendications 2 à 4, **caractérisé en ce que** le chant (52) comprend une gorge (62) pour loger la bande de maintien (42).

6. Dispositif de fixation selon l'une quelconque des revendications précédentes, **caractérisé en ce que** la bande de maintien (42) est une lame ressort.

7. Dispositif de fixation selon la revendication 6, **caractérisé en ce que** le support comprend au moins une fente (72) et **en ce qu'**au moins une extrémité de la bande de maintien est recourbée sur elle-même de manière à former une première portion rectiligne (78), une portion courbe (80) et une seconde portion rectiligne (82), la distance entre les deux portions rectilignes (78, 82) augmentant en s'éloignant de la portion courbe (80) afin de permettre l'introduction de ladite extrémité (68) dans la fente (72) et d'empêcher son retrait sans une action de pincement tendant à rapprocher les deux portions rectilignes (78, 82).

8. Dispositif de fixation selon la revendication 7, **caractérisé en ce que** l'autre extrémité de la bande de maintien (42) comprend une forme en L, le pied du L (74) étant introduit dans une fente (70) prévue dans le support (34) de manière à retenir la bande de maintien (42).

9. Dispositif de fixation selon l'une quelconque des revendications précédentes, **caractérisé en ce que** le corps (38) comprend des moyens pour l'immobiliser en translation selon la direction de cheminement.

10. Dispositif de fixation selon l'une quelconque des revendications précédentes, **caractérisé en ce qu'**au moins une des mâchoires (40.1, 40.2) comprend une empreinte (44) dont la forme est conforme à au moins une partie de la section du harnais.

11. Dispositif de fixation selon la revendication 10, **caractérisé en ce que** chaque mâchoire comprend pour chaque harnais une empreinte (44) demi-cylindrique, les empreintes (44) de deux mâchoires étant disposées en vis-à-vis par paire lorsque les mâchoires sont en position fermée afin de délimiter un passage de forme sensiblement cylindrique.

12. Dispositif de fixation selon la revendication 10 ou 11, **caractérisé en ce qu'**au moins une empreinte (44) comprend des cannelures (46) orientées selon la direction de cheminement.

## Patentansprüche

1. Vorrichtung zur Befestigung eines elektrischen Kabelbaumes an der Struktur eines Luftfahrzeugs mit einer mit der Struktur verbundenen Halterung (34), wobei der Kabelbaum einer Verlegerichtung folgt und die Vorrichtung einen Grundkörper (38) mit wenigstens zwei Klemmen (40.1, 40.2) aufweist, wobei wenigstens eine der Klemmen in einer im rechten Winkel zur Verlegerichtung ausgerichteten Bezugsebene zwischen einer ersten offenen Stellung bewegbar ist, in der diese die Einführung wenigstens eines Kabelbaums gestatten, und einer zweiten geschlossenen Stellung, in der diese den eingeführten Kabelbaum oder die eingeführten Kabelbäume hält, und andererseits ein Halteband (42), dessen Enden (66, 68) mit der Halterung (34) verbunden sind und das es gestattet, die Klemmen in einer geschlossenen Stellung und den Grundkörper an der Halterung (34) zu halten, **dadurch gekennzeichnet, dass** das Halteband (42) als Feder ausgebildet ist.

2. Vorrichtung zur Befestigung nach Anspruch 1, **dadurch gekennzeichnet, dass** das Halteband (42) an wenigstens einem Teil einer Schmalseite (52) des Grundkörpers angesetzt ist, die im rechten Winkel zur Bezugsebene verläuft.

3. Vorrichtung zur Befestigung nach Anspruch 1 oder 2, **dadurch gekennzeichnet, dass** der Grundkörper (38) drei Klemmen umfasst, darunter eine erste Klemme (40.1), die mit zwei Klemmen (40.2, 40.3) zusammenwirkt, die jeweils über einen Gelenkbereicht mit der ersten Klemme (40.1) verbunden sind.

4. Vorrichtung zur Befestigung nach Anspruch 3, **dadurch gekennzeichnet, dass** die Gelenkbereiche möglichst weit voneinander entfernt sind.

5. Vorrichtung zur Befestigung nach einem der Ansprüche 2 bis 4, **dadurch gekennzeichnet, dass** die Schmalseite (52) eine Nut (62) für die Aufnahme des Haltebands (42) aufweist.

6. Vorrichtung zur Befestigung nach einem der vorhergehenden Ansprüche, **dadurch gekennzeichnet, dass** das Halteband (42) eine Blattfeder ist.

7. Vorrichtung zur Befestigung nach Anspruch 6, **dadurch gekennzeichnet, dass** die Halterung wenigstens einen Schlitz (72) aufweist, und dass wenigstens ein Ende des Haltebands auf sich selbst zurückgebogen ist, um einen ersten geraden Abschnitt (78), einen gekrümmten Abschnitt (80) und einen zweiten geraden Abschnitt (82) zu bilden, wobei sich der Abstand zwischen den beiden geraden Abschnitten (78, 82) mit zunehmender Entfernung vom gekrümmten Abschnitt (80) vergrößert, um das Einführen des Endes (68) in den Schlitz (72) zu ermöglichen und um dessen Entfernung ohne einen Klemmvorgang der dazu neigt, die beiden geraden Abschnitte (78, 82) einander anzunähern, zu verhindern.

8. Vorrichtung zur Befestigung nach Anspruch 7, **dadurch gekennzeichnet, dass** das andere Ende des Haltebands (42) L-förmig ausgebildet ist, wobei der Querstrich des L (74) in einen Schlitz (70) eingeführt wird, der in der Halterung (34) vorgesehen ist, um das Halteband (42) zu halten.

9. Vorrichtung zur Befestigung nach einem der vorhergehenden Ansprüche, **dadurch gekennzeichnet, dass** der Grundkörper (38) Mittel zu dessen Befestigung gegen ein Verschieben in Verlegerichtung aufweist.

10. Vorrichtung zur Befestigung nach einem der vorhergehenden Ansprüche, **dadurch gekennzeichnet, dass** wenigstens eine der Klemmen (40.1, 40.2) ein Profil (44) aufweist, dessen Form an wenigstens einen Teil des Kabelbaumabschnitts angepasst ist.

11. Vorrichtung zur Befestigung nach Anspruch 10, **dadurch gekennzeichnet, dass** jede Klemme für jeden Kabelbaum ein halbzylindrisches Profil (44) aufweist, wobei die Profile (44) der beiden Klemmen jeweils paarweise einander gegenüberliegend angeordnet sind, wenn die Klemmen sich in der geschlossenen Stellung befinden, um eine im Wesentlichen zylindrische Durchführung zu begrenzen.

12. Vorrichtung zur Befestigung nach Anspruch 10 oder 11, **dadurch gekennzeichnet, dass** wenigstens ein Profil (44) in Verlegerichtung ausgerichtete Riffeln (46) aufweist.

## Claims

1. Device for attaching an electrical harness on a structure of an aircraft comprising a support (34) connected to the structure, the harness following a path direction, **characterized in that** it comprises a body (38) with at least two jaws (40.1, 40.2), at least one of the jaws being movable along a reference plane perpendicular to the path direction between a first open position in which they enable the insertion of at least one harness and a second closed position in which they keep the inserted harness or harnesses in position, and on the other hand, a retainer strip (42) whose ends (66, 68) are connected to the support (34) allowing for the jaws to be maintained in closed position and the body to be flattened against the support (34), **characterized in that** the retainer strip (42) is in the form of a blade.

2. Attachment device according to claim 1, **characterized in that** the retainer strip (42) is flattened against at least one portion of a flank (52) of the body which is perpendicular to the reference plane.

3. Attachment device according to claim 1 or 2, **characterized in that** the body (38) comprises three jaws, a first jaw (40.1) which cooperates with two jaws (40.2,40.3), each connected to the first jaw (40.1) via an articulation zone.

4. Attachment device according to claim 3, **characterized in that** the articulation zones are spaced apart as far as possible.

5. Attachment device according to any of claims 2 to 4, **characterized in that** the flank (52) comprises a groove (62) to house the retainer strip (42).

6. Attachment device according to any of the previous claims, **characterized in that** the retainer strip (42) is a spring blade.

7. Attachment device according to claim 6, **characterized in that** the support comprises at least one slot (72) and **in that** at least one end of the retainer strip is curved upon itself so as to form a first rectilinear portion (78), a curved portion (80), and a second rectilinear portion (82), the distance between the two rectilinear portions (78, 82) increasing in a direction going away from the curved portion (80) in order to enable the insertion of said end (68) in the slot (72) and to prevent its removal without a pinching action tending to move the two rectilinear portions (78, 82) closer together.

8. Attachment device according to claim 7, **characterized in that** the other end of the retainer strip (42) comprises an L shape, the foot of the L (74) being inserted in a slot (70) provided in the support (34) so as to retain the retainer strip (42).

9. Attachment device according to any of the previous claims, **characterized in that** the body (38) comprises means for immobilizing it in translation along the path direction.

10. Attachment device according to any of the previous claims, **characterized in that** at least one of the jaws (40.1,40.2) comprises a cavity (44) whose shape conforms to at least one portion of the section of the harness.

11. Attachment device according to claim 10, **characterized in that** each jaw comprises, for each harness, a semi-cylindrical cavity (44), the cavities (44) of the two jaws being arranged facing one another as a pair when the jaws are in the closed position in order to define a passage having a substantially cylindrical shape.

12. Attachment device according to claim 10 or 11, **characterized in that** at least one cavity (44) comprises channels (46) oriented along the path direction.
